# EUROPÄISCHE PATENTSCHRIFT

(11) **EP 2 953 218 B1**
(45) Veröffentlichungstag und Bekanntmachung des Hinweises auf die Patenterteilung: **28.09.2016**
(21) Anmeldenummer: 15169811.5
(22) Anmeldetag: 29.05.2015
(51) Int. Cl.: H02B 1/052

(54) **HALTEEINRICHTUNG FÜR EINEN QUERTRÄGER IN EINEM ELEKTRISCHEN SCHALTSCHRANK UND SCHALTSCHRANK MIT EINER SOLCHEN EINRICHTUNG**
HOLDING DEVICE FOR A CROSS MEMBER IN AN ELECTRICAL CABINET AND CABINET HAVING SUCH A DEVICE
DISPOSITIF DE RETENUE POUR UNE TRAVERSE DANS UNE ARMOIRE ÉLECTRIQUE ET ARMOIRE ÉLECTRIQUE DOTÉE D'UN TEL DISPOSITIF

(30) Priorität: 03.06.2014 DE 102014007863
(43) Veröffentlichungstag der Anmeldung: 09.12.2015
(73) Patentinhaber: ABB AG, 68309 Mannheim (DE)
(72) Erfinder: Roth, Michael, 77880 Sasbach (DE)

(56) Entgegenhaltungen:
- DE-A1-102007 034 408

## Beschreibung

Die Erfindung betrifft eine an einem Trägerprofil eines Schaltschrankes anbringbare Halteeinrichtung für einen Querträger, nach dem Oberbegriff des Anspruches 1 und einen Schaltschrank, insbesondere einen Niederspannungs- oder Mittelspannungsschaltschrank, nach dem Oberbegriff des Anspruches 14.

Zum Aufbau eines elektrischen Schaltschrankes werden Trägerprofile aus Stahl benutzt, die zu einem Gerüst zusammengesetzt werden, das an den vier vertikalen Ecken senkrecht verlaufende Trägerprofile aufweist, die mit horizontalen Trägerprofilen an den Enden der vertikalen Trägerprofile verbunden sind. An dem Gerüst werden eine Boden- und Deckwand sowie Seitenwände und eine Rückwand angesetzt. Innerhalb des Schaltschrankes sind Querträger angeordnet, die zum Beispiel als Hutprofiltragschienen oder Montageplatten ausgebildet sind und auf denen elektrische Installationsgeräte befestigt werden können.

Derartige elektrische Installationsgeräte besitzen oft unterschiedliche Höhen, so dass der Querträger oder die Querträger, auf denen die Installationsgeräte befestigt werden sollen, in unterschiedlicher Höhe oder unterschiedlicher Entfernung von dem betreffenden Trägerprofil anzuordnen sind.

Da die einzelnen Trägerprofile meist vorbestimmte Öffnungen zur Befestigung eines Querträgers aufweisen, ist oftmals lediglich eine stufige Verstellung des Querträgers zur Aufnahme der Installationsgeräte möglich.

Aus der DE 10 2007 034 408 A1 sowie WO 2009/012983 A2 ist eine diesbezügliche Halteeinrichtung bekannt geworden, welche eine stufenlose Verstellung des jeweiligen Querträgers erlaubt.

Bei dieser Lösung ist eine an einem Trägerprofil anbringbare, senkrecht zum Trägerprofil verstellbare Halteeinrichtung für einen Querträger in einem elektrischen Installationsschaltschrank vorgesehen, die einen am Trägerprofil befestigbaren Halter und einen am Halter verschiebbar festlegbaren Bügel aufweist, der wenigstens zwei senkrecht zueinander verlaufende Bügelschenkel aufweist, wobei ein erster Bügelschenkel am Halter befestigbar und am zweiten Bügelschenkel der Querträger fixierbar ist. Dabei ist der Halter mit einem Vorsprung am Trägerprofil befestigbar und der Bügel ist dann senkrecht zum Vorsprung am Halter und senkrecht zum Trägerprofil fixierbar. Weiterhin weist der Halter im Wesentlichen eine L-Form auf, deren einer Schenkel den Vorsprung bildet und an deren anderem Schenkel der erste Bügelschenkel fixierbar ist. Der erste Bügelschenkel wird dabei in eine Aufnahmeöffnung eingesteckt und mittels eines durch den Vorsprung am Halter hindurch geführten Fixierelementes fixiert. Das Fixierelement ist dabei als Feststellschraube ausgebildet, welche schräg unter einem Winkel von 45° zur Längserstreckung des ersten Bügelschenkels und durch den Vorsprung hindurch in den Halter einschraubbar ist und die mit ihrem freien Ende in einen Längsschlitz am ersten Bügelschenkel des Haltebügels eingreift. Zu diesem Zweck ist das als Feststellschraube ausgebildete Fixierelement mit einer in dem Längsschlitz teilweise eingreifenden Spitze versehen. Die Feststellschraube ist bevorzugt eine Blechschraube, die mit ihrem Gewinde in den Schlitz des Bügelschenkels einschneidet.

Mit vorgenannter Einrichtung können Querträger in unterschiedlicher Höhe stufenlos eingebaut werden, wobei die unter einem Winkel von der Frontseite her anzusetzenden und einzudrehenden Befestigungsschrauben oftmals vergleichsweise schwer handhabbar und durch die Gewindeeinschnitte der Bügelschenkel beschädigt und ohne weitere Einschränkungen nur bedingt wiederverwendbar ist.

Zudem erschwert jedoch gerade die Schrägstellung der Schrauben die Montage des jeweiligen Tiefbaubügels an einer Seitenwand eines Schrankgehäuses deren Zugang und Betätigung nachteilig.

Aufgabe der Erfindung ist es, die vorgenannte Halteeinrichtung dahingehend weiterzuentwickeln, dass eine erleichterte und verbesserte Befestigungsmöglichkeit sowie Schutzisolationsmöglichkeit, insbesondere auch eine Möglichkeit zur nachträglichen Schutzisolierung auch bei bereits montierter Halteeinrichtung , geschaffen ist, wobei der Querträger zur Aufnahme beispielsweise von elektrischen Installationsgeräten auf möglichst einfache Art und Weise stufenlos verstellbar und festlegbar ist.

Diese Aufgabe wird erfindungsgemäß durch eine Halteeinrichtung mit den Merkmalen des Anspruches 1 sowie einen Schaltschrank mit den Merkmalen des Anspruchs 14 gelöst. Vorteilhafte Ausgestaltungen und Weiterbildungen der Erfindung sind in weiteren Ansprüchen und der nachfolgenden Beschreibung angegeben.

Erfindungsgemäß ist damit eine an einem Trägerprofil anbringbare, senkrecht zum Trägerprofil verstellbare Halteeinrichtung für einen Querträger in einem elektrischen Installationsschaltschrank vorgesehen, die einen am Trägerprofil mittels wenigstens zweier Befestigungsmittel befestigbaren Halter und einen am Halter verschiebbar festlegbaren Bügel aufweist, der wenigstens zwei senkrecht zueinander verlaufende Bügelschenkel aufweist, wobei ein erster Bügelschenkel mit Längsschlitz am Halter befestigbar und am zweiten Bügelschenkel der Querträger fixierbar ist, wobei der erste Bügelschenkel in eine Aufnahmeöffnung des Halters einsteckbar und mittels einer am Halter vorgesehenen Fixieranordnung fixier- oder festlegbar ist und die Fixieranordnung wenigstens eine Feststellschraube sowie ein Klemmelement umfasst und der Halter wenigstens eine seitliche Ausnehmung zur Aufnahme eines Kontaktelementes aufweist, welches in eigesetztem Zustand bei montierter Halteeinrichtung in elektrisch leitender Verbindung mit dem Bügel sowie mit dem Trägerprofil steht.

Vorteilhaft können durch Lösen lediglich eines Befestigungsmittels und Entfernen des jeweiligen Kontaktelementes bereits montierte Halter oder Halteeinrichtungen ohne vollständige Demontage der Halteeinrichtung sowie der daran angeordneten Geräte und Einrichtungen auf einfache Art und Weise auch nachträglich noch "schutzisoliert" werden.

In einer vorteilhaften Ausgestaltung ist die am Halter vorgesehene seitliche Ausnehmung in der Art eines Schachtes oder der Art einer Tasche ausgebildet, welche, zumindest teilbereichsweise, bei montierter oder verbauter Halteeinrichtung von einem der Befestigungsmittel beziehungsweise Befestigungselemente durchgriffen ist oder wird.

Weiterhin ist vorsehbar, dass die jeweilige Ausnehmung, insbesondere der Schacht oder die Tasche, wenigstens ein Führungsmittel, insbesondere in der Art eines Steges, aufweist, welcher in eine im Kontaktelement vorgesehene dazu komplementäre Nut bei Einsetzen des Kontaktelementes in den Halter beziehungsweise in das Kopfteil des Halters eingreift und das Kontaktelement positionsgenau führt und/oder haltert.

Auch ist vorsehbar, dass das Kontaktelement einen im Wesentlichen L-artigen Querschnitt mit zwei unter einem Winkel angeordneten beziehungsweise einen Winkel einschließenden, insbesondere senkrecht aufeinander stehenden, Schenkeln aufweist.

Weiterbildend ist dabei vorsehbar, dass beide Schenkel vorzugsweise identisch ausgebildet sind und/oder das Kontaktelement ebenensymmetrisch zur winkelhalbierenden Ebene zwischen den beiden Schenkeln ausgebildet ist.

In einer weiteren Ausgestaltung ist die Nut seitlich versetzt beziehungsweise asymmetrisch in den jeweiligen Schenkel eingebracht, derart, dass jeder Schenkel einen breiteren eher flächigen Bereich und einen arm- oder fingerartigen Bereich, den sog. Kontaktfinger, ausbildet.

Vorteilhaft ist dabei vorsehbar, dass der jeweilige Kontaktfinger leicht federnd nachgiebig ausgebildet ist, wobei der Kontaktfinger oder -arm bei Einsetzen des Kontaktelementes in den Halter derart positioniert ist, dass sich dieser in elektrisch leitendem Kontakt mit dem Bügel befindet.

Weiterhin ist vorsehbar, dass der Kontaktfinger bei Einsetzen in den Halter durch das Führungsmittel, insbesondere den Steg, in Richtung zum Bügel hin geführt und/oder gebogen wird, bis sich dieser in elektrisch leitendem Kontakt mit dem Bügel befindet.

Zur Verbesserung der Kontakteigenschaften ist auf der dem Bügel gegenüberliegenden Stirnseite beziehungsweise der der Nut abgewandten Seite des Kontaktfingers des Kontaktelementes eine Anformung, insbesondere eine Kontaktnase, vorsehbar.

In einer weiteren Ausführung ist das Kontaktelement als gewinkelte Kontaktplatte und/oder aus Blech oder Federstahl oder Kupfer gebildet.

In einer weiteren Ausgestaltung ist auch der Halter im Wesentlichen L-förmig ausgebildet und weist ein mit dem Trägerprofil verschraubbares Kopfteil sowie eine dazu senkrecht verlaufende Bügelführung auf.

Die Ausnehmung zur Aufnahme des Kontaktelementes, insbesondere einer Kontaktplatte, welche im Wesentlichen L-förmig ausgebildet ist, ist dabei seitlich im Kopfteil des Halters vorsehbar.

Insbesondere werden als Seitenflächen oder Seite des Kopfteils dabei die senkrecht zur Bügelführung und zum Trägerprofil verlaufenden beziehungsweise ausgerichteten Flächen des Kopfteils verstanden. Die Flächennormale der Seiten beziehungsweise Seitenflächen des Kopfteils verlaufen in montiertem Zustand der Halteeinrichtung dabei in axialer Richtung oder in Längsrichtung des Trägerprofils an welchem die Halteeinrichtung angeordnet und/oder befestigt ist.

Weiterhin ist vorsehbar, dass der jeweilige Halter jeweils eine seitliche Ausnehmung zu beiden Seiten des Kopfteils zur Aufnahme jeweils eines Kontaktelementes aufweist.

In einer weiteren Ausgestaltung ist vorgesehen, dass das Kontaktelement universell zu beiden Seiten des Halters beziehungsweise des Kopfteils des Halters einsetzbar und/oder verwendbar ist.

Vorteilhaft können auf diese Weise bereits montierte Halter oder Halteeinrichtungen ohne Demontage der Halteeinrichtung, wobei nur ein Befestigungsmittel, insbesondere eine Schraube, entfernt werden muss, auch nachträglich noch "schutzisoliert" werden.

In besonders vorteilhafter Ausgestaltung ist die Feststellschraube parallel zur Längserstreckung des ersten Bügelschenkels in den Halter einschraubbar, wobei die Schraube mit ihrem freien, dem Schraubenkopf abgewandten Ende, das Klemmelement durchgreift und das Klemmelement als Klemmplatte, insbesondere als konkav gekrümmte Klemmplatte mit im Wesentlichen rechteckiger oder T-förmiger Grundfläche ausgebildet ist, wobei ein freies Ende der Klemmplatte montiertem Zustand der Fixieranordnung am ersten Bügelschenkel des Haltebügels kraftschlüssig anliegt und den ersten Bügelschenkel und Halter gegenbeziehungsweise miteinander fixiert und festlegt, insbesondere verklemmt.

In einer vorteilhaften Weiterbildung ist die Klemmplatte dabei als konkav gekrümmte Federstahlplatte ausgeführt, welche mittig eine Ausnehmung, insbesondere ein Loch, aufweist, und welche beim Eindrehen der Schraube, insbesondere einer M5 Schraube, und Anziehen beziehungsweise Festlegen derselben gegen ihre Federspannung mehr oder minder flach gedrückt wird, wobei ein freies Ende der Klemmplatte gegen den ersten Bügelschenkel gedrückt wird und letztlich ein Festklemmen des Bügels ermöglicht und bewirkt wird und/oder der Bügel blockiert beziehungsweise arretiert und in seiner Position fixiert wird beziehungsweise ist.

Weiterbild kann die Klemmplatte dabei sowohl symmetrisch mit im Wesentlichen Rechteckform oder asymmetrisch (im Hinblick auf eine Punktsymmetrie) in T-Form ausgebildet sein. Grundsätzlich sind weitere unterschiedliche Formgestaltungen möglich.

In einer weiteren Ausführungsvariante weist der Halter auf seiner dem Trägerprofil abgewandten Seite des Kopfteils, welche nachfolgend auch als Kopfseite bezeichnet wird, eine wannenartige Ausnehmung, insbesondere eine wannenartige Einformung, welche im Wesentlichen rechteckig ausgebildet ist und im Eckbereich von wenigstens zwei Ecken erweitert ist, auf. Die Erweiterung ist dabei als eine Art Ausbuchtung ausgebildet zur Aufnahme der Befestigungsmittel, insbesondere von Schrauben- und/oder deren Köpfen, für die Befestigung oder Verbindung und insbesondere Verschraubung des Halters mit dem jeweiligen Trägerprofil. Im erweiterten Eckbereich sind des Weiteren entsprechende Ausnehmungen, insbesondere Löcher oder Bohrungen, zum Durchgriff von Befestigungsschrauben vorgesehen mit welchen der Halter am Trägerprofil anschraubbar und/oder festlegbar ist.

Die seitlichen Ausnehmungen und die wannenartige Ausnehmung im Kopfteil sind dabei derart aufeinander abgestimmt, dass bei eingesetztem Kontaktelement und eingedrehter Befestigungsschraube der Schraubenkopf das Kontaktelement beziehungsweise einen seiner Schenkel zumindest teilbereichsweise überdeckt und/oder beim Anziehen der Schraube der Schraubenkopf gegen das Kontaktelement gepresst wird, so dass ein elektrisch leitender Kontakt zwischen zumindest Schraube und Kontaktelement hergestellt ist und besteht.

Auf diese Weise ist es möglich das Kontaktelement auch noch nachträglich durch Lösen lediglich einer einzigen Befestigungsschraube entweder zu entnehmen und eine Schutzisolierung zwischen Trägerprofil und Bügel beziehungsweise Querträger herzustellen oder einzubringen und eine elektrisch leitende Verbindung zwischen Trägerprofil und Bügel beziehungsweise Querträger herzustellen.

In der wannenartigen Ausnehmung ist weiterhin eine Verdrehsicherung für die Klemmplatte in der Art einer im Wesentlichen rechteckig teilbereichsweise um die Klemmplatte umlaufenden Anformung, insbesondere eine Wand, vorgesehen, wobei die Höhe der Anformung vorzugsweise der Tiefe der wannenartigen Ausnehmung entspricht, jedenfalls die Anformung die Kopfseite des Halters nicht überragt.

Die rechteckige Anformung weist dabei im Wesentlichen drei Seitenelemente auf und ist auf der dem Bügel abgewandten Seite offen ausgebildet. Das dem Bügel beziehungsweise dem ersten Bügelschenkel zugewandte Seitenelement der Anformung weist in seinem unteren Bereich in Bodennähe, wobei sich Bodennähe auf den Boden der wannenartigen Ausnehmung bezieht, einen Schlitz oder ein Langloch zur Führung und zum Durchgriff des Klemmelementes beziehungsweise der Klemmplatte in Einbauposition auf den Bügel beziehungsweise Bügelschenkel auf.

In einer weiteren Ausgestaltung ist in der wannenartigen Ausnehmung in der dem Bügel abgewandten Seite der Wannenwand fluchtend in Verlängerung des Klemmelementes im Wannenbodenbereich eine schlitzartige Ausnehmung oder Nut vorgesehen, in welche das Klemmelement in Einbaulage, insbesondere bei eingeschraubter Feststellschraube eingreift.

Vorteilhaft ist vorsehbar, dass das Kontaktelement, in die jeweilige schachtartige Ausnehmung des Kopfteils des Halters einsetzbar oder einlegbar oder einschiebbar und mit einem der beiden Befestigungsmitteln, insbesondere einer Schraube, festlegbar ist. Das Klemmelement sowie das Kontaktelement sind dabei aus einem leitenden Material, insbesondere einem Metall wie beispielsweise Federstahl, Stahl oder Kupfer gebildet.

In verbautem Zustand der Halteeinrichtung und bei eigebautem Kontaktelement befindet sich das Kontaktelement somit über das eine Befestigungsmittel, insbesondere die Befestigungsschraube, in elektrisch leitendem Kontakt mit dem Trägerprofil sowie mit dem Bügel, so dass eine durchgängige Schutzleiterverbindung gegeben ist. Ist das Kontaktelement entnommen ist der elektrische Kontakt und damit die Durchgängigkeit zwischen Querträger und Trägerprofil unterbrochen und der Querträger, insbesondere eine Hutprofilschiene, ist zum Trägerprofil beziehungsweise Geräteträger schutzisoliert.

Als Feststellschraube ist beispielweise eine Blechschraube oder selbstschneidende Schraube, die mit ihrem Gewinde in ein zur Befestigung vorgesehenes Sack- oder Durchgangsloch des Halters oder in eine Ausnehmung eines in den Halter einsetzbaren Konterteils einschneidet, einsetzbar.

Alternativ kann die Feststellschraube auch als Schraube mit Außengewinde zur Aufnahme einer Mutter ausgebildet sein, wobei der Halter eine entsprechende Aufnahme zum Einsetzen der jeweiligen Mutter aufweist. Dabei sind vorzugsweise Schrauben mit einem metrischen Außengewinde oder mit einem Zoll-Außengewinde einsetzbar.

Der Halter wird an einem Trägerprofil befestigt, welches beispielsweise ein senkrecht verlaufendes Profilelement oder Rahmenelement sein kann, wobei der Querträger, das heißt der Träger für die elektrischen Installationsgeräte, mittels des Bügels an unterschiedlichen Stellen am Halter festgelegt werden kann.

Gemäß einer vorteilhaften Ausführungsform weist der Halter einen Vorsprung auf, mit welchem Vorsprung er am Trägerprofil befestigbar ist, wobei der Bügel senkrecht zum Vorsprung am Halter und senkrecht zum Trägerprofil fixierbar ist.

In einer weiteren Ausgestaltung ist der Halter dabei im Wesentlichen L-förmig ausgebildet und weist einen ersten sowie einen zweiten Schenkel auf, welche senkrecht zueinander ausgerichtet sind und welcher erster Schenkel den Vorsprung ausbildet.

In besonders vorteilhafter Ausgestaltung kann der Halter im Wesentlichen eine L-Form besitzen, deren einer Schenkel den Vorsprung bildet und an deren anderem Schenkel der erste Bügelschenkel fixierbar ist.

Der andere Schenkel kann dabei eine Aufnahmeöffnung zur formschlüssigen Halterung und Führung des ersten Bügelschenkels aufweisen, wobei die Aufnahmeöffnung eine Schwalbenschwanzform aufweisen oder als geschlossener Schlitz ausgebildet sein kann.

In zusammengebautem oder montiertem Zustand drückt dabei die beispielhaft als Federstahlplatte ausgebildete Klemmplatte in das Langloch oder den Schlitz des Bügels ein und blockiert damit ein Verschieben desselben, wodurch dieser letztlich am Trägerprofil festgelegt ist beziehungsweise festlegbar ist.

Die Erfindung bezieht sich darüber hinaus auch auf einen Schaltschrank mit wenigstens einer erfindungsgemäßen Halteeinrichtung.

Anhand der Zeichnungen sowie der demgemäßen Ausführungsbeispiele sollen die Erfindung sowie weitere vorteilhafte Ausgestaltungen und Weiterbildungen der Erfindung näher erläutert und dargelegt werden.

Es zeigen:
- Fig. 1: 3-dim Darstellung einer beispielhaft ausgebildeten erfindungsgemäßen Halteeinrichtung mit rechteckigem Klemmelement sowie eingesetztem Kontaktelement,
- Fig. 2: 3-dim Darstellung einer beispielhaft ausgebildeten erfindungsgemäßen Halteeinrichtung mit rechteckigem Klemmelement und gelöstem Befestigungsmittel sowie entnommenem Kontaktelement,
- Fig. 3a: 3-dim Darstellung einer beispielhaft ausgebildeten erfindungsgemäßen Halteeinrichtung mit rechteckigem Klemmelement und gelöstem Befestigungsmittel sowie entnommenem Kontaktelement gemäß Fig. 2,
- Fig. 3b: 3-dim Darstellung einer beispielhaft ausgebildeten erfindungsgemäßen Halteeinrichtung mit rechteckigem Klemmelement sowie eingesetztem Kontaktelement gemäß Fig. 1,
- Fig. 4: 3-dim Darstellung eines beispielhaft ausgebildeten erfindungsgemäßen L-förmigen Klemmelementes,
- Fig. 5: 3-dim Draufsicht auf eine beispielhaft ausgebildete erfindungsgemäße Halteeinrichtung mit rechteckigem Klemmelement sowie eingesetztem Kontaktelement
- Fig. 6: Detailansicht des Bereiches mit eingesetztem Klemmelement gemäß Fig. 5,
- Fig. 7: 3-dim Draufsicht auf eine beispielhaft ausgebildete erfindungsgemäße Halteeinrichtung mit rechteckigem Klemmelement jedoch ohne Kontaktelement,
- Fig. 8: Detailansicht des Bereiches ohne Klemmelement gemäß Fig. 7,
- Fig. 9: 3-dim Draufsicht auf eine beispielhaft ausgebildete erfindungsgemäße Halteeinrichtung mit rechteckigem Klemmelement sowie eingesetztem Kontaktelement mit angedeutetem Leitungspfad ,
- Fig. 10: 3-dim Draufsicht auf eine beispielhaft ausgebildete erfindungsgemäße Halteeinrichtung mit rechteckigem Klemmelement aber ohne Kontaktelement und angedeutetem unterbrochenen Leitungspfad und damit "schutzisoliert".

Ein elektrischer Schaltschrank umfasst unter Anderem vertikale Trägerprofile 100,. Die anderen Trägerprofile, die ein Rahmengerüst des Schaltschrankes bilden, sind nicht angegeben.

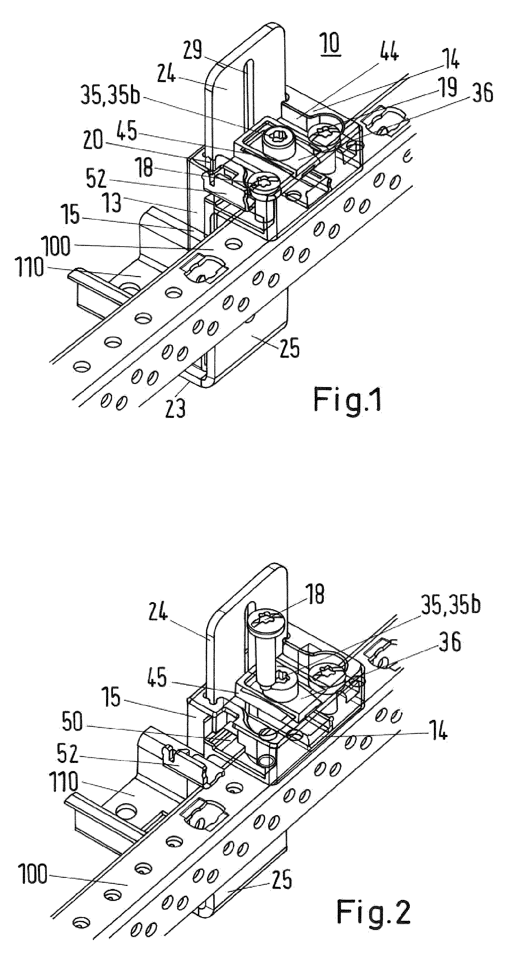

Nachfolgend wird auf die Figuren 1 bis 10 abgestellt, welche unterschiedliche Ansichten und Darstellung derselben Halteeinrichtung 10 und damit auch nahezu identische Merkmale zeigen.

In den Figuren 1 bis 10 ist in 3-dim Darstellung eine beispielhaft ausgebildete erfindungsgemäße Halteeinrichtung 10 mit einem rechteckförmigen Klemmelement 36 angegeben.

In den Figuren 1 und 2 ist jeweils eine 3-dim Darstellung einer beispielhaft ausgebildeten erfindungsgemäßen Halteeinrichtung 10 mit rechteckigem Klemmelement 36 sowie eingesetztem Kontaktelement 52 (Figur 1) und festgelegtem Befestigungsmittel 18 oder entnommenem Kontaktelement (Figur 2) und gelöstem Befestigungsmittel 18 Kontaktelement gezeigt, welche sich hinsichtlich ihrer weiteren technischen Merkmale jedoch entsprechen und nachfolgend gemeinsam beschrieben werden.
Die Halteeinrichtung 10 umfasst dabei weiterhin einen Halter 13 sowie einen Bügel 25, welche insbesondere für einen elektrischen Schaltschrank für die Montage von Halteschienen 110 an Trägerprofilen 100 einsetzbar ist.

Die demgemäße an einem Trägerprofil 100 anbringbare, senkrecht zum Trägerprofil 100 verstellbare Halteeinrichtung 10 für einen Querträger 110 in einem elektrischen Installationsschaltschrank, umfasst einen am Trägerprofil 100 befestigbaren Halter 13 und einen am Halter 13 verschiebbar festlegbaren Bügel 25, der wenigstens zwei senkrecht zueinander verlaufende Bügelschenkel 24,23 aufweist, wobei ein erster Bügelschenkel 24 mit Längsschlitz 29 am Halter 13 befestigbar und am zweiten Bügelschenkel 23 ein jeweiliger Querträger 110 insbesondere mittels Verschraubung 120 fixierbar und/oder anbringbar ist, wobei der erste Bügelschenkel 24 in eine Aufnahmeöffnung 20 des Halters 13 einsteckbar und mittels einer am Halter 13 vorgesehenen Fixieranordnung 35,36 fixier- oder festlegbar ist und die Fixieranordnung 35,36 wenigstens eine Feststellschraube 35 sowie ein Klemmelement 36, welches im hier gezeigten Beispiel konkav gekrümmt ist, umfasst.

Die Feststellschraube 35 der Fixieranordnung 35,36 wird dabei parallel zur Längserstreckung des ersten Bügelschenkels 24 in den Halter 13 eingeschraubt, wobei die Schraube 35 mit ihrem freien, dem Schraubenkopf 35b abgewandten Ende, das konkav gekrümmte Klemmelement 36 durchgreift und das Klemmelement 36 in montiertem Zustand der Fixieranordnung 35,36 zumindest teilbereichsweise, mit seiner Stirnseite kraftschlüssig gegen den ersten Bügelschenkel 24 des Haltebügels 25 drückt und den ersten Bügelschenkel 24sowie den Halter 13 gegeneinander beziehungsweise miteinander fixiert und festlegt.

Die Klemmplatte 36 ist dabei vorzugsweise als konkav gekrümmte Federstahlplatte ausgeführt, und weist mittig eine Ausnehmung, insbesondere ein Loch, auf. Beim Eindrehen der Feststellschraube 35, insbesondere einer M5 Schraube, und Anziehen beziehungsweise Festlegen derselben wird die Klemmplatte mehr oder minder flach gedrückt und/oder reversibel gegen ihre Federkraft oder Spannkraft verformt, wodurch die Klemmplatte eine Vergrößerung ihrer projizierten Länge (ausgehend vom Projektionspunkt Schraubenkopf Feststellschraube auf die Ebene des Wannenbodens) erfährt und mit ihrer dem Bügel 25 zugewandten Stirnseite gegen den ersten Bügelschenkel 24 drückt, so dass letztlich ein Festklemmen des Bügels 25 ermöglicht und bewirkt ist und der Bügel 25 blockiert beziehungsweise arretiert und in seiner Position fixiert ist.

Weiterhin weist der Halter 10 im Bereich des Klemmelementes 36 eine Anformung 45 auf, welche zumindest teilbereichsweise formschlüssig an das Klemmelement 36 angepasst ist, derart, dass beim Eindrehen und Festziehen der Feststellschraube 35 ein Verdrehen des Klemmelementes 36 durch die Anformung 45 verhindert ist.

In deren erweiterten Eckbereichen der Ausnehmung 44, sind dabei wenigstens zwei Durchgriffe für Befestigungsschrauben 18,19 vorgesehen mit welchen der Halter 13 am jeweiligen Trägerprofil 100 anschraubbar und/oder festlegbar ist.

Der Halter 13 ist ebenfalls im Wesentlichen L-förmig ausgebildet und weist einen mit dem jeweiligen Trägerprofil 100 verschraubbaren als vorspringendes Kopfteil ausgebildeten ersten Schenkel 14 sowie einen dazu senkrecht verlaufenden zweiten Schenkel 15 mit Bügelführung auf. Die Bügelführung wird dabei durch einen den zweiten Schenkel 15 in Längsrichtung durchgreifenden Schlitz 20 gebildet.

An der Innenseite des zweiten Schenkels 24sind Leisten vorsehbar, die in die gleiche Richtung wie der Vorsprung beziehungsweise das Kopfteil 14 vorspringen.

Auf der dem Vorsprung 14 entgegengesetzt liegenden Seite, die parallel zum Vorsprung 14 und senkrecht zum zweiten Schenkel 15 verläuft, besitzt die Leiste eine Rille, die parallel zum freien Ende der Leiste verläuft.

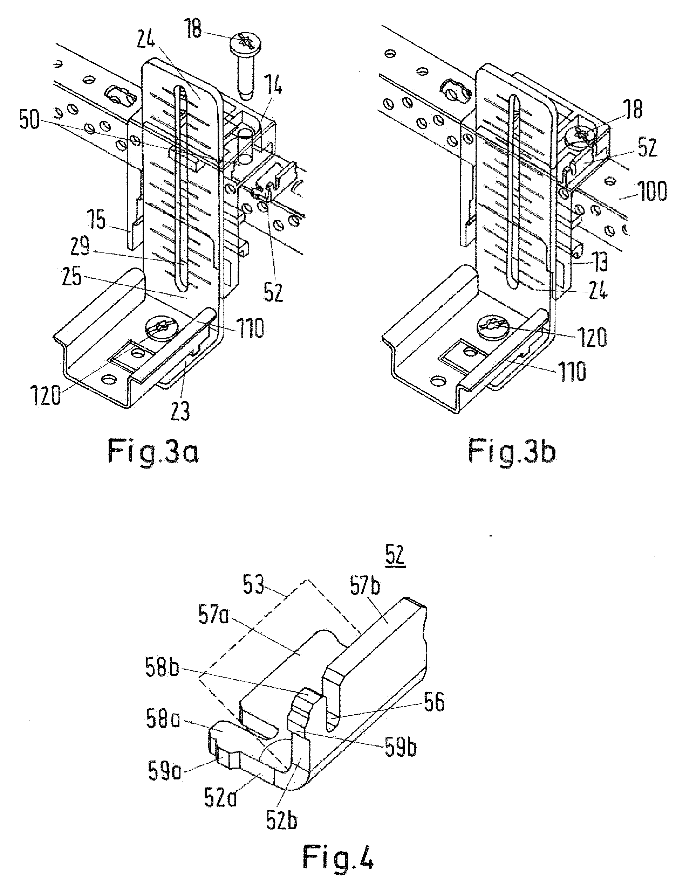

Der Schlitz 20 dient, wie insbesondere den Figuren 3a und 3b entnehmbar, zur Aufnahme eines ersten Bügelschenkels 24 eines L-förmigen Bügels 25, wobei der erste Bügelschenkel 24 in den Schlitz 20 vom freien Ende des zweiten Schenkels 15 aus in Richtung zum Vorsprung 14 hin eingefügt wird, so dass der zweite Bügelschenkel 23 vom Trägerprofil weg weist und in entgegengesetzte Richtung vorspringt wie der Vorsprung 14. Auf den zweiten Bügelschenkel 23 können, wie in der Fig.1 und 2 gezeigt, zum Beispiel Hutprofiltragschienen als Querträger 110 festgeschraubt werden.

Der erste Bügelschenkel 24 weist einen Längsschlitz 29 auf.

Auf seiner dem Trägerprofil 100 abgewandten Seite des Kopfteils 14, welche nachfolgend auch als Kopfseite bezeichnet wird, weist der Halter 13 eine wannenartige Ausnehmung 44, insbesondere eine Einformung, auf, wobei die Ausnehmung 44 im Wesentlichen rechteckig ausgebildet ist und im Eckbereich von wenigstens zwei zum Bügel beabstandet angeordneten Ecken erweitert ist. Die jeweilige Erweiterung ist dabei als eine Art Ausbuchtung ausgebildet zur Aufnahme von Schrauben- 18,19 und/oder deren Köpfen für die Verschraubung des Halters 13 mit dem jeweiligen Trägerprofil 100.

In der wannenartigen Ausnehmung 44 ist weiterhin eine Verdrehsicherung für die Klemmplatte 36 in der Art einer im Wesentlichen rechteckig teilbereichsweise um die Klemmplatte 36 umlaufenden Anformung 45, insbesondere eine Art Wand, vorgesehen, wobei die Höhe der Anformung 45 vorzugsweise der Tiefe der wannenartigen Ausnehmung 44 entspricht, so dass die Anformung die Kopfoberseite des Halters 13 nicht überragt.

Die rechteckige Anformung 45 weist dabei im Wesentlichen drei Seitenelemente auf und ist auf der dem Bügel 25 abgewandten Seite offen ausgebildet. Das dem Bügel 25 beziehungsweise dem ersten Bügelschenkel 24 zugewandte Seitenelement der Anformung 45 weist in seinem unteren Bereich in Bodennähe, wobei sich Bodennähe auf den Boden der wannenartigen Ausnehmung 44 bezieht, einen Schlitz oder ein Langloch zur Führung und zum Durchgriff des Klemmelementes 36 beziehungsweise der Klemmplatte in Einbauposition auf den Bügel 25 beziehungsweise den ersten Bügelschenkel 24 auf.

In einer weiteren Ausgestaltung ist in der wannenartigen Ausnehmung 44 in der dem Bügel 25 abgewandten Seite der Wannenwand fluchtend in Verlängerung des Klemmelementes 36 im Wannenbodenbereich eine schlitzartige Ausnehmung oder Nut vorgesehen, in welche das Klemmelement 36 in Einbaulage, insbesondere bei eingeschraubter Feststellschraube 35 eingreift.

Die Feststellschraube 35 kann auch, wie im hier gezeigten Beispiel, als Schraube mit Außengewinde zur Aufnahme einer als Konterteil ausgebildeten Mutter ausgestaltet sein, wobei der Halter 13 eine entsprechende schachtartige Aufnahme zum Einsetzen der jeweiligen Mutter aufweist, so dass das Konterteil in Einbauposition in Verlängerung der Schraube anordenbar ist, Konterteil und Schacht sind dabei derart aufeinander angepasst, dass ein Verdrehen des Konterteils im Schacht beim Festlegen beziehungsweise Andrehen der Feststellschraube 35 verhindert ist. Dabei sind vorzugsweise Schrauben mit einem metrischen Außengewinde oder mit einem Zoll-Außengewinde einsetzbar. Auch hier kann das Konterteil und insbesondere die Mutter quadratische oder achteckige Grundfläche aufweisen, welche insbesondere zur Bewirkung einer Verdrehsicherung von Vorteil ist.

Die Anformung 45 ist dabei zumindest teilbereichsweise formschlüssig an das Klemmelement 36 angepasst, derart, dass beim Eindrehen und Festziehen der Feststellschraube 35 ein Verdrehen des Klemmelementes 36 durch die Anformung 45 verhindert ist.

In deren erweiterten Eckbereichen der Ausnehmung 44, sind dabei wenigstens zwei Durchgriffe für Befestigungsschrauben 18,19 vorgesehen mit welchen der Halter 13 am jeweiligen Trägerprofil 100 anschraubbar und/oder festlegbar ist.

Weiterhin weist der Halter 13 im hier gezeigten Beispiel zwei seitliche Ausnehmung 50, in der Art von Schächten, zur Aufnahme jeweils eines Kontaktelementes 52 auf, welches in eigesetztem Zustand bei montierter Halteeinrichtung 10 in elektrisch leitender Verbindung mit dem Bügel 25 sowie mit dem Trägerprofil 100 steht und eine durchgängige elektrisch leitende Verbindung zwischen Trägerprofil 100 und Querträger 110 schafft..

Weiterhin ist vorsehbar, dass die seitlichen Ausnehmungen 50 in der Art eines Schachtes zumindest teilbereichsweise, bei montierter Halteeinrichtung 10, von jeweils einem der Befestigungsmittel 18,19, insbesondere der Befestigungsschrauben, durchgriffen sind oder werden.

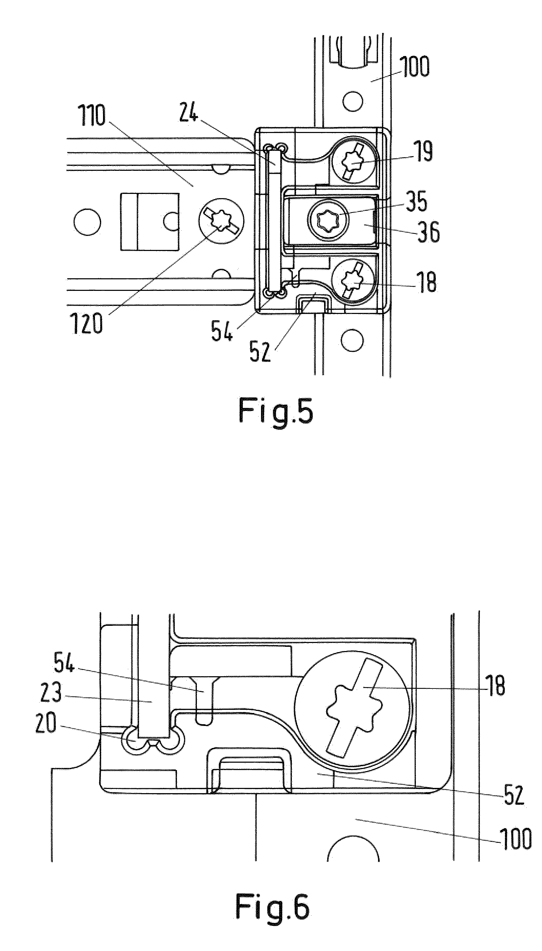

Wie in den Figuren 5 und 6 gezeigt, weist die jeweilige Ausnehmung 50 beziehungsweise der Schacht darüber hinaus wenigstens ein Führungsmittel 54, insbesondere in der Art eines Steges, auf, welches in eine im Kontaktelement 52 vorgesehene dazu komplementäre Nut 56 bei Einsetzen des Kontaktelementes 52 in den Halter 13 beziehungsweise das Kopfteil 14 des Halters 13 eingreift und das Kontaktelement 52 positionsgenau führt und/oder haltert.

Das Führungsmittel könnte in einer alternativen Ausführung allerdings auch entfallen.

Auch ist vorsehbar, dass das Kontaktelement, wie in Figur 4 gezeigt, einen im Wesentlichen L-artigen Querschnitt mit zwei senkrecht aufeinander stehenden Schenkeln 52a,b aufweist.

Vorteilhaft ist dabei vorsehbar, dass beide Schenkel identisch ausgebildet sind und/oder das Kontaktelement ebenensymmetrisch zur winkelhalbierenden Ebene 53 zwischen den beiden Schenkeln 52a,b ausgebildet ist.

Hier beispielhaft ist die Nut 56 seitlich versetzt in den jeweiligen Schenkel 52,a,b eingebracht, derart, dass jeder Schenkel 52a,b einen breiteren eher flächigen Bereich 57a,b und einen dünneren armartigen oder fingerartigen Bereich, den sogenannten Kontaktfinger 58a,b ausbildet.

Vorteilhaft ist dabei vorsehbar, dass der armartige Bereich 58a,b leicht federnd nachgiebig ausgebildet ist, wobei der Arm 58a,b bei Einsetzen des Kontaktelementes 52 in den Halter 15 durch das Führungsmittel 54 beziehungsweise den Steg in Richtung zum Bügel 25 hin geführt und/oder gelenkt wird, insbesondere auch gebogen wird, so dass sich dieser in Einbauposition in elektrisch leitendem Kontakt mit dem Bügel 25 befindet.

Zur Verbesserung der Kontakteigenschaften ist auf der dem Bügel 25 gegenüberliegenden Stirnseite des Kontaktfingers 58a,b beziehungsweise des Kontaktelementes 52 eine Anformung 59a,b, insbesondere eine Kontaktnase oder ein Kontaktpin, vorgesehen.

Das Kontaktelement 52 ist dabei beispielhaft auch als gewinkelte Kontaktplatte und/oder aus Blech oder Federstahl oder Kupfer gebildet.

Auch der Halter 13 ist, wie insbesondere den Figuren 3a und 3b entnehmbar, im Wesentlichen L-förmig ausgebildet und weist ein mit dem Trägerprofil 100 verschraubbares Kopfteil 14 sowie eine dazu senkrecht verlaufende Bügelführung 15 auf.

Die Ausnehmung zur Aufnahme des Kontaktelementes 52, insbesondere einer Kontaktplatte, welche im Wesentlichen L-förmig ausgebildet ist, ist dabei seitlich im Kopfteil 14 des Halters 13 vorsehbar und kann schacht- oder taschenartig ausgebildet sein.

Weiterhin kann vorgesehen sein, dass der jeweilige Halter jeweils eine seitliche Ausnehmung 50 zu beiden Seiten des Kopfteils 14 zur Aufnahme jeweils eines Kontaktelementes 52 aufweist, wobei das Kontaktelement 52 vorteilhaft universell zu beiden Seiten des Halters 13 beziehungsweise des Kopfteils 14 des Halters 13 einsetzbar und/oder verwendbar ist.

Vorteilhaft können auf diese Weise bereits montierte Halter oder Halteeinrichtungen ohne Demontage der Halteeinrichtung, wobei nur ein Befestigungsmittel, insbesondere eine Schraube, entfernt werden muss, auch nachträglich noch "schutzisoliert" werden.

Die Figuren 3a,b sowie 5 bis 10 zeigen lediglich weitere Ansichten der bereits aus den vorherigen Figuren 1 und 2 sowie Figur 4 bekannten Ausführungsbeispiele. Hinsichtlich der Beschreibung der Merkmale dieser Figuren wird daher zur Vermeidung von Wiederholungen auf die Ausführungen zu den Figuren 1 ,2 und 4 verwiesen.

Es sei an dieser Stelle lediglich noch darauf hingewiesen, dass in der Fig. 5 eine beispielhaft ausgebildete erfindungsgemäße Halteeinrichtung mit rechteckigem Klemmelement sowie eingesetztem Kontaktelement in 3-dim Draufsicht auf die Befestigungsmittel und das Kopfteil gem. Fig1 und Fig. 3b gezeigt ist.

Darüber hinaus zeigt Fig. 6 eine Detailansicht des Bereiches des Kopfteils mit eingesetztem Klemmelement gemäß Fig. 5.

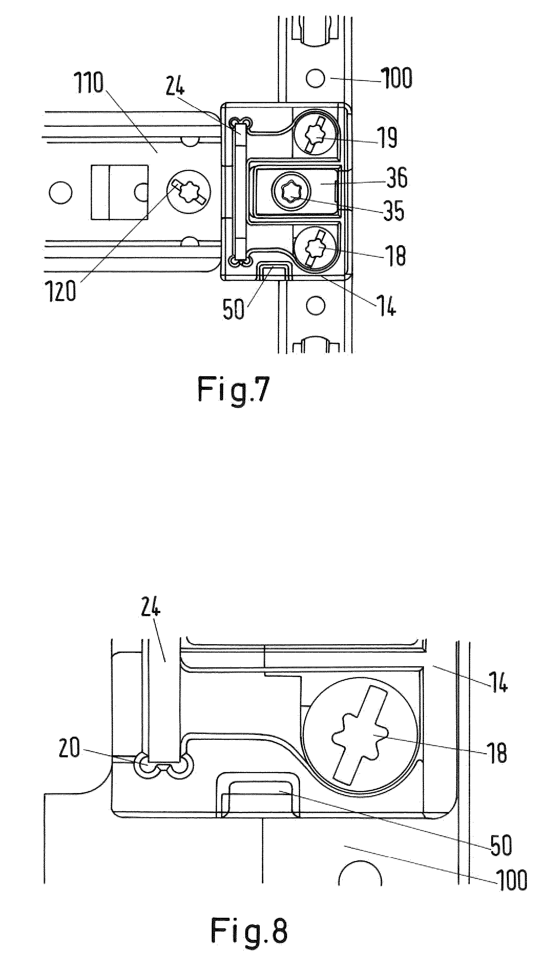

In Fig 7 ist die aus Fig. 5 bekannte Einrichtung jedoch mit entnommenem Kontaktelement 52 und gelöstem Befestigungsmittel gezeigt.

Dementsprechend zeigt Fig. 8 eine Detailansicht des Bereiches des Kopfteils ohne Klemmelement gemäß Fig. 7.

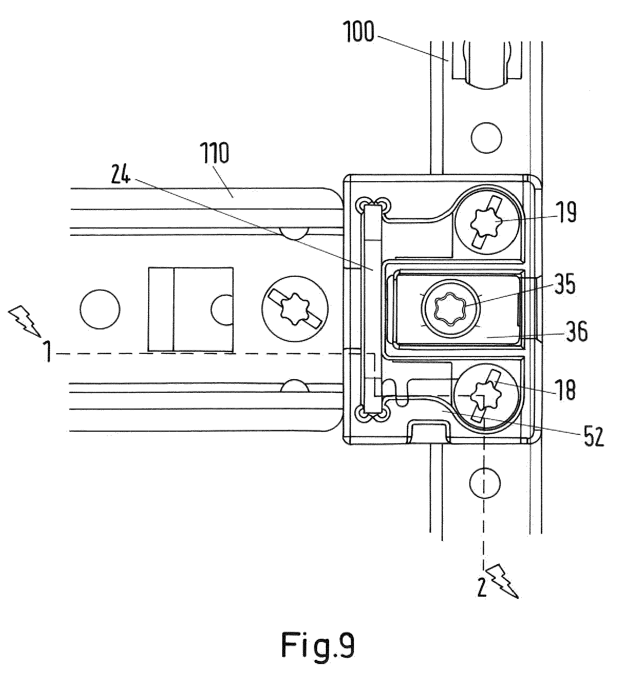

In der Fig. 9 ist die aus den Figuren 1,3b und 5 bekannte Halteeinrichtung mit rechteckigem Klemmelement sowie eingesetztem Kontaktelement mit angedeutetem Leitungspfad beziehungsweise Kontaktpfad gezeigt.

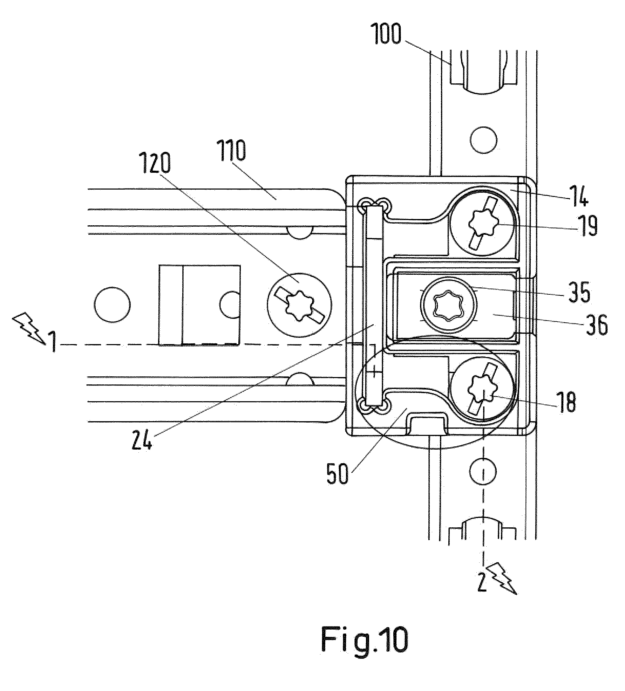

Demgegenüber zeigt Fig. 10 die aus den Figuren 2, 3a und 7 bekannte Halteeinrichtung mit rechteckigem Klemmelement aber ohne Kontaktelement und angedeutetem unterbrochenen Leitungspfad und damit gegen die Trägerschiene schutzisoliertem Bügel und Querträger.

## Patentansprüche

1. Halteeinrichtung für einen Querträger (110) in einem elektrischen Schaltschrank, welche an einem Trägerprofil anbringbar und senkrecht zum Trägerprofil (100) verstellbar ist und einen am Trägerprofil (100) mittels wenigstens zweier Befestigungsmittel (18,19) befestigbaren Halter (13) und einen am Halter (13) verschiebbar festlegbaren Bügel (25) aufweist, der wenigstens zwei senkrecht zueinander verlaufende Bügelschenkel aufweist, wobei ein erster Bügelschenkel (24) mit Längsschlitz (29) am Halter befestigbar und am zweiten Bügelschenkel (23) der Querträger (110) fixierbar ist, wobei der erste Bügelschenkel (24) in eine Aufnahmeöffnung (20) des Halters (13) einsteckbar und mittels einer am Halter vorgesehenen Fixieranordnung fixier- oder festlegbar ist und die Fixieranordnung wenigstens eine Feststellschraube (35) sowie ein Klemmelement (36) umfasst und der Halter wenigstens eine seitliche Ausnehmung (50) zur Aufnahme eines Kontaktelementes (52) aufweist, welches in eigesetztem Zustand bei montierter Halteeinrichtung (10) in elektrisch leitender Verbindung mit dem Bügel (25) sowie mit dem Trägerprofil (100) steht.

2. Halteeinrichtung nach Anspruch 1, **dadurch gekennzeichnet, dass** die am Halter vorgesehene seitliche Ausnehmung (50) in der Art eines Schachtes oder einer Tasche ausgebildet ist, welcher, zumindest teilbereichsweise, bei montierter Halteeinrichtung (10) von einem der Befestigungsmittel (18,19) durchgriffen ist oder wird.

3. Halteeinrichtung nach Anspruch 1 oder 2, **dadurch gekennzeichnet, dass** die Ausnehmung (50) wenigstens ein Führungsmittel (54), insbesondere in der Art eines Steges, aufweist, welcher in eine im Kontaktelement (52) vorgesehene dazu komplementäre Nut (56) bei Einsetzen des Kontaktelementes (52) in den Halter (10) beziehungsweise das Kopfteil (14) des Halters (10) eingreift und das Kontaktelement (52) positionsgenau führt und/oder haltert.

4. Halteeinrichtung nach einem der vorherigen Ansprüche, **dadurch gekennzeichnet, dass** das Kontaktelement (52) auch bei bereits montiertem oder verbautem Halter (13) einsetzbar oder entnehmbar ist, ohne dass der Halter (13) vollständig zu demontieren ist.

5. Halteeinrichtung nach einem der vorherigen Ansprüche, **dadurch gekennzeichnet, dass** das Kontaktelement (52) einen im Wesentlichen L-artigen Querschnitt mit zwei einen Winkel einschließenden, insbesondere senkrecht aufeinander stehenden, Schenkeln (57a-59a; 57b-59b) aufweist.

6. Halteeinrichtung nach Anspruch 5, **dadurch gekennzeichnet, dass** beide Schenkel (57a-59a; 57b-59b) identisch ausgebildet sind und/oder das Kontaktelement (52) ebenensymmetrisch zur winkelhalbierenden Ebene zwischen den beiden Schenkeln ausgebildet ist.

7. Halteeinrichtung nach einem der Ansprüche 5 oder 6, **dadurch gekennzeichnet, dass** wenigstens einer der beiden Schenkel (57a-59a; 57b-59b) eine Nut (56) aufweist und/oder die Nut (56) seitlich versetzt oder asymmetrisch in den jeweiligen Schenkel eingebracht ist, derart, dass ein armartigen Bereich oder eine Art Kontaktfinger (58a,b) ausgebildet ist.

8. Halteeinrichtung nach Anspruch 7, **dadurch gekennzeichnet, dass** der armartige Bereich oder der Kontaktfinger (58a,58b) federnd nachgiebig ausgebildet ist und/oder auf der der Nut (56) abgewandten Seite eine Anformung (59a,59b), insbesondere eine Kontaktnase, aufweist.

9. Halteeinrichtung nach einem der vorherigen Ansprüche, **dadurch gekennzeichnet, dass** der Halter (13) im Wesentlichen L-förmig ausgebildet und einen mit dem Trägerprofil (100) verschraubbaren Kopfteil (14) sowie eine dazu senkrecht verlaufende Bügelführung (15) aufweist.

10. Halteeinrichtung nach einem der vorherigen Ansprüche, **dadurch gekennzeichnet, dass** die Ausnehmung (50) zur Aufnahme des Kontaktelementes (52) seitlich im Halter (13) und insbesondere im Kopfteil (14) des Halters (13) vorgesehen und/oder zugänglich ist.

11. Halteeinrichtung nach einem der vorherigen Ansprüche, **dadurch gekennzeichnet, dass** die Feststellschraube (35) parallel zur Längserstreckung des ersten Bügelschenkels (24) in den Halter (13) einschraubbar ist, wobei die Schraube mit ihrem freien, dem Schraubenkopf abgewandten Ende, das Klemmelement (36) durchgreift und/oder das Klemmelement (36) als Klemmplatte, insbesondere als konkav gekrümmte Klemmplatte, mit im Wesentlichen rechteckiger oder T-förmiger Grundfläche ausgebildet ist.

12. Halteeinrichtung nach einem der vorherigen Ansprüche, **dadurch gekennzeichnet, dass** ein freies Ende des Klemmelementes (36) im montierten Zustand der Fixieranordnung am ersten Bügelschenkel (24) des Haltebügels (25) kraft- und/oder formschlüssig anliegt und den ersten Bügelschenkel (24) und Halter (13) gegen beziehungsweise miteinander fixiert und festlegt, insbesondere verklemmt.

13. Halteeinrichtung nach einem der vorherigen Ansprüche, **dadurch gekennzeichnet, dass** das Kopfteil (14) des Halters (13) als eine Art Vorsprung ausgebildet ist, mit welchem Vorsprung der Halter (13) am Trägerprofil (100) befestigbar ist, wobei der Bügel (25) senkrecht zum Vorsprung am Halter und senkrecht zum Trägerprofil fixierbar ist.

14. Elektrischer Schaltschrank, insbesondere einen Niederspannungs- oder Mittelspannungsschaltschrank für eine Installationsverteilung, mit vorzugsweise senkrecht und parallel zueinander verlaufenden Trägerprofilen, mit wenigstens einer Halteeinrichtung (10) gemäß den Merkmalen eines der Ansprüche 1 bis 13, **dadurch gekennzeichnet, dass** die Halteeinrichtung (10) an senkrecht verlaufenden Trägerprofilen anbringbar beziehungsweise angebracht ist.

## Claims

1. Holding device for a crossmember (110) in an electrical switchgear cabinet, which holding device can be attached to a carrier profile and can be adjusted perpendicular to the carrier profile (100) and has a holder (13), which can be fastened to the carrier profile (100) by means of at least two fastening means (18, 19), and a bracket (25), which can be secured in a displaceable manner to the holder (13) and has at least two bracket limbs which run perpendicular to one another, wherein a first bracket limb (24) with a longitudinal slot (29) can be fastened to the holder and can be fixed to the second bracket limb (23) of the crossmember (110), wherein the first bracket limb (24) can be inserted into a receiving opening (20) in the holder (13) and can be fixed or secured by means of a fixing arrangement which is provided on the holder, and the fixing arrangement comprises at least one locking screw (35) and also a clamping element (36), and the holder has at least one lateral recess (50) for receiving a contact element (52) which, in the inserted state, is electrically conductively connected to the bracket (25) and also to the carrier profile (100) when the holding device (10) is mounted.

2. Holding device according to Claim 1, **characterized in that** the lateral recess (50) which is provided on the holder is designed in the form of a shaft or a pocket through at least subregions of which one of the fastening means (18, 19) passes or will pass when the holding device (10) is mounted.

3. Holding device according to Claim 1 or 2, **characterized in that** the recess (50) has at least one guide means (54), in particular in the form of a web, which engages into a complementary groove (56), which is provided in the contact element (52), when the contact element (52) is inserted into the holder (10) or the head part (14) of the holder (10), and guides and/or holds the contact element (52) in a precise position.

4. Holding device according to one of the preceding claims, **characterized in that** the contact element (52) can also already be inserted or removed when the holder (13) is mounted or installed, without the holder (13) having to be completely disassembled.

5. Holding device according to one of the preceding claims, **characterized in that** the contact element (52) has a substantially L-shaped cross section with two limbs (57a-59a; 57b-59b) which enclose an angle, in particular are perpendicular in relation to one another.

6. Holding device according to Claim 5, **characterized in that** the two limbs (57a-59a; 57b-59b) are of identical design and/or the contact element (52) is designed with plane-symmetry in relation to the angle-bisecting plane between the two limbs.

7. Holding device according to either of Claims 5 and 6, **characterized in that** at least one of the two limbs (57a-59a; 57b-59b) has a groove (56), and/or the groove (56) is inserted into the respective limb in a laterally offset or asymmetrical manner in such a way that an arm-like region or a kind of contact finger (58a, b) is formed.

8. Holding device according to Claim 7, **characterized in that** the arm-like region or the contact finger (58a, 58b) is of resiliently flexible design and/or has a moulding (59a, 59b), in particular a contact lug, on that side which is averted from the groove (56).

9. Holding device according to one of the preceding claims, **characterized in that** the holder (13) is of substantially L-shaped design and has a head part (14), which can be screwed to the carrier profile (100), and also a bracket guide (15) which runs perpendicular to the said head part.

10. Holding device according to one of the preceding claims, **characterized in that** the recess (50) for receiving the contact element (52) is provided and/or accessible laterally in the holder (13) and, in particular, in the head part (14) of the holder (13).

11. Holding device according to one of the preceding claims, **characterized in that** the locking screw (35) can be screwed into the holder (13) parallel to the longitudinal extent of the first bracket limb (24), wherein the screw passes through the clamping element (36) by way of its free end which faces the screw head, and/or the clamping element (36) is designed as a clamping plate, in particular as a concavely curved clamping plate, with a substantially rectangular or T-shaped base area.

12. Holding device according to one of the preceding claims, **characterized in that** a free end of the clamping element (36) bears against the first bracket limb (24) of the holding bracket (25) in a force-fitting and/or interlocking manner in the mounted state of the fixing arrangement and fixes and secures, in particular clamps, the first bracket limb (24) and holder (13) against or to one another.

13. Holding device according to one of the preceding claims, **characterized in that** the head part (14) of the holder (13) is designed as a form of projection, by way of which projection the holder (13) can be fastened to the carrier profile (100), wherein the bracket (25) can be fixed perpendicular to the projection on the holder and perpendicular to the carrier profile.

14. Electrical switchgear cabinet, in particular a low-voltage or medium-voltage switchgear cabinet for an installation distribution system, comprising carrier profiles which preferably run perpendicular and parallel to one another, comprising at least one holding device (10) according to the features of one of Claims 1 to 13, **characterized in that** the holding device (10) can be attached or is attached to perpendicularly running carrier profiles.

## Revendications

1. Dispositif de retenue pour une traverse (110) dans une armoire électrique, lequel peut être monté sur un profilé de support et est réglable perpendiculairement au profilé de support (100) et comporte un support (13) fixable sur le profilé de support (100) au moyen d'au moins deux moyens de fixation (18, 19) et un étrier (25) pouvant être placé de manière mobile sur le support (13), qui comprend au moins deux branches d'étrier passant perpendiculairement l'une à l'autre, une première branche d'étrier (24) avec une fente longitudinale (29) étant fixable sur le support et fixable sur la deuxième branche d'étrier (23) de la traverse (110), la première branche d'étrier (24) pouvant être enfichée dans une ouverture de réception (20) du support (13) et pouvant être fixée ou placée au moyen d'un système de fixation prévu sur le support et le système de fixation comprenant au moins une vis de serrage (35) ainsi qu'un élément de serrage (36) et le support comportant au moins un évidement (50) latéral pour recevoir un élément de contact (52), lequel, à l'état utilisé, est en liaison électroconductrice avec l'étrier (25) ainsi qu'avec le profilé de support (100) une fois le dispositif de retenue (10) monté.

2. Dispositif de retenue selon la revendication 1, **caractérisé en ce que** l'évidement (50) latéral prévu sur le support est constitué sous la forme d'un puits ou d'une poche, qui est ou sera au moins en partie traversé par un des moyens de fixation (18, 19) une fois le dispositif de retenue (10) monté.

3. Dispositif de retenue selon la revendication 1 ou 2, **caractérisé en ce que** l'évidement (50) comporte au moins un moyen de guidage (54), en particulier sous la forme d'une moulure, lequel vient en prise dans une rainure (56) complémentaire à cet effet prévue dans l'élément de contact (52) lors de l'insertion de l'élément de contact (52) dans le support (10) ou la partie de tête (14) du support (10) et guide et/ou maintient exactement en position l'élément de contact (52).

4. Dispositif de retenue selon l'une quelconque des revendications précédentes, **caractérisé en ce que** l'élément de contact (52) peut être inséré ou enlevé même avec le support (13) déjà monté ou installé sans que le support (13) soit complètement à démonter.

5. Dispositif de retenue selon l'une quelconque des revendications précédentes, **caractérisé en ce que** l'élément de contact (52) comporte une section pour l'essentiel en forme de L avec deux branches (57a-59a; 57b-59b) formant un angle, en particulier placées perpendiculairement l'une sur l'autre.

6. Dispositif de retenue selon la revendication 5, **caractérisé en ce que** les deux branches (57a-59a; 57b-59b) sont constituées de façon identique et/ou l'élément de contact (52) est constitué symétrique en plan par rapport à un plan formant bissectrice entre les deux branches.

7. Dispositif de retenue selon l'une quelconque des revendications 5 ou 6, **caractérisé en ce qu'**au moins une des deux branches (57a-59a; 57b-59b) comporte une rainure (56) et/ou la rainure (56) est aménagée latéralement décalée ou asymétrique dans les branches respectives de telle manière qu'un secteur en forme de bras ou une sorte d'ergot de contact (58a, b) est constitué.

8. Dispositif de retenue selon la revendication 7, **caractérisé en ce que** le secteur en forme de bras ou l'ergot de contact (58a, 58b) est constitué flexible faisant ressort et/ou comporte sur le côté opposé à la rainure (56) une conformation (59a, 59b), en particulier un talon de contact.

9. Dispositif de retenue selon l'une quelconque des revendications précédentes, **caractérisé en ce que** le support (13) est constitué pour l'essentiel en forme de L et comporte une partie de tête (14) pouvant être vissée avec le profilé de support (100) ainsi qu'un guidage en étrier (15) passant perpendiculairement à celui-ci.

10. Dispositif de retenue selon l'une quelconque des revendications précédentes, **caractérisé en ce que** l'évidement (50) est prévu et/ou accessible pour recevoir l'élément de contact (52) sur le côté du support (13) et en particulier dans la pièce de tête (14) du support (13).

11. Dispositif de retenue selon l'une quelconque des revendications précédentes, **caractérisé en ce que** la vis de fixation (35) peut être vissée parallèlement à l'extension longitudinale de la première branche d'étrier (24) dans le support (13), la vis traversant l'élément de serrage (36) avec son extrémité libre opposée à la tête de vis et/ou l'élément de serrage (36) étant constitué comme plaque de serrage, en particulier comme plaque de serrage courbe de manière concave, avec pour l'essentiel une surface de base rectangulaire ou en forme de T.

12. Dispositif de retenue selon l'une quelconque des revendications précédentes, **caractérisé en ce qu'**une extrémité libre de l'élément de serrage (36) s'applique par adhérence et/ou conformité de forme à l'état monté de l'agencement de fixation à la première branche d'étrier (24) de l'étrier de fixation (25) et fixe et place, en particulier serre la première branche d'étrier (24) et le support (13) respectivement l'un contre l'autre.

13. Dispositif de retenue selon l'une quelconque des revendications précédentes, **caractérisé en ce que** la partie de tête (14) du support (13) est constituée comme un type de saillie, saillie avec laquelle le support (13) peut être fixé sur le profilé de support (100), l'étrier (25) pouvant être fixé perpendiculairement à la saillie sur le support et perpendiculairement au profilé de support.

14. Armoire électrique, en particulier une armoire électrique à basse tension ou à moyenne tension pour une distribution d'installation, avec de préférence des profilés de support passant perpendiculairement et parallèlement l'un par rapport à l'autre, avec au moins un dispositif de retenue (10) selon les caractéristiques d'une des revendications 1 à 13, **caractérisée en ce que** le dispositif de retenue (10) peut être monté ou est respectivement monté sur des profilés de supports passant perpendiculairement.
